# EUROPEAN PATENT APPLICATION

(11) **EP 4 550 632 A1**
(43) Date of publication of application: **07.05.2025**
(21) Application number: 23207974.9
(22) Date of filing: 06.11.2023
(51) Int. Cl.: H02K 1/32, H02K 7/00, H02K 7/116, H02K 9/197, F16H 57/04, H02K 9/19, H02K 5/173

(54) **COST EFFICIENT ROTOR COOLING**

(71) Applicant: Schaeffler Technologies AG & Co. KG, 91074 Herzogenaurach (DE)
(72) Inventor: Stojkovic, Dragan, 80687 München (DE); Burkhardt, Axel, 80687 München (DE); Leopold, Lennart, 80687 München (DE); Reitinger, Günter, 80687 München (DE); Krotow, Ivan, 80687 München (DE)
(74) Representative: Vitesco Technologies

(57) **Abstract**

The present invention relates to an e-Drive cooling circuit for the rotor of an e-machine, the cooling circuit including a shaft (20), a rotor (40) mounted to the shaft (20), the rotor (40) being part of an e-machine, a central cavity (18) formed as part of the shaft (20), and a flow path, a portion of the flow path including the flow of fluid through the central cavity (18) such that fluid flowing through the central cavity (18) along at least a portion of the flow path reduces the temperature of the shaft (20) and the rotor (40). The cooling circuit for an e-machine also includes a reservoir (12) in fluid communication with the central cavity (18), and a sump (24) in fluid communication with the central cavity (18). At least a portion of the flow path includes the flow of the fluid from the reservoir (12) to the central cavity (18) and into the sump (24).

## Description

The invention relates generally to an e-Drive cooling circuit to provide sufficient cooling of the rotor of an e-machine, where the reducer and e-machine are part of an electric drive system.

Electric vehicles commonly use a high-voltage axle drive, which is a highly integrated electric drive system. The electric drive system typically consists of an e-motor (or e-machine), an inverter, and a reducer. Many newer designs of high-voltage axle drives require high levels of voltage and current. Because of the current and voltage requirements for high-voltage axle drives, there is also stringent requirements for cooling.

In order to remove heat generated during the operation of an e-machine, different types of cooling, like convective water/oil cooling, impinging oil, or hybrid cooling is used. In the situation where the e-machine is a Permanent Magnet Synchronous (PSM) machine, insufficient cooling may result in possible demagnetization. Several attempts have been made to provide sufficient cooling to the e-machine, such as combining the existing stator cooling of the e-machine with direct rotor cooling in order to increase the continuous performance of the e-machine. Other solutions have included using the oil of the reducer for cooling the rotor shaft. However, these solutions also require additional costs compared to standard water cooling due to the addition of hardware components like a pump, filter, or an additional heat exchanger.

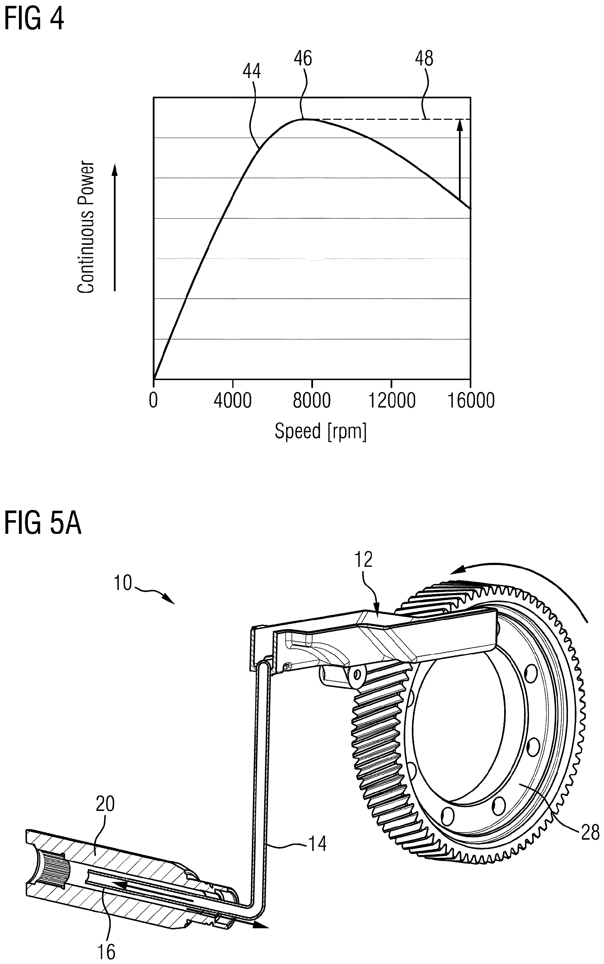

Referring now to Figure 4, a graph which includes a curve 44 showing the correlation between the speed of the e-machine and the power of the e-machine is shown. The curve 44 has a peak 46, and the area of the curve 44 after the peak 46 indicates where the power of the e-machine is reduced due to insufficient cooling as the speed of the e-machine is increased. It is desirable to increase the continuous power at high rotational speeds as indicated by the dashed line 48 in Figure 4 in order to fulfill the continuous power requirements at high rotational speeds.

Therefore, there exists a need for sufficient cooling of a rotor for an e-machine which operates using high levels of voltage and current.

Therefore, it is an object of the present invention to provide a cooling circuit or cooling system for direct rotor cooling of an e-machine, and method for manufacturing the same, and more specifically to using various components of a reducer of an electric drive system to function as part of a cooling circuit to reduce the temperature of the rotor of the e-machine.

This object may be achieved by the cooling circuit according to independent claims 1 and 7, and the method according to independent claim 11. Preferred embodiments are given in the dependent claims.

In an embodiment, the present invention is a cooling circuit which includes using the gear oil for additional cooling of the rotor of the e-machine without additional components (such as a pump/heat exchanger/filter). In an embodiment of a cooling system or cooling circuit according to the present invention, the oil collects in a reservoir due to the rotation of a driven gear of the reducer and then flows into a cavity of the shaft of the rotor by gravity.

The oil flowing into the shaft is pressurized by the rotation of the shaft, resulting in the oil being pumped through the shaft. The volume of oil pumped through the shaft increases as the speed of the shaft increases, and this increase in volume of oil pumped through the shaft is desired at high speeds to maintain desired performance of the e-machine at high speeds.

In an embodiment, the present invention combines a water jacket, or any other stator cooling, with rotor shaft oil cooling, using the pumping effect of the rotating shaft. During rotation, the oil from a reservoir of the reducer is gravity fed into a cavity of the shaft, and the oil in the cavity of the shaft is pressurized as the shaft rotates. This effect of drawing in oil from the reservoir increases as the rotational speed of the shaft also increases.

In this way, the oil from the reducer circulates between the reducer and the shaft of the e-machine, which results in a reduction in temperature of the rotor, increasing the continuous power at higher rotational speeds without need for additional equipment like a pump, a filter, and a heat exchanger.

The heat extracted from the rotor is transferred to the surrounding area and the water jacket, or any other stator cooling circuit placed in the housing, through appropriate oil splashing against the reducer housing. Additional heat coming from the rotor to the oil may decrease oil viscosity, thereby increasing the reducer efficiency.

In various embodiments, the oil supply to the shaft takes place in the reducer housing either from the oil sump or using an oil reservoir. In other various embodiments, the hollow shaft may be manufactured with/without screws in order to increase the oil displacement.

In an embodiment, the present invention is a cooling circuit for an e-machine, the cooling circuit including a shaft, a rotor mounted to the shaft, the rotor being part of an e-machine, a central cavity formed as part of the shaft, and a flow path, where a portion of the flow path includes the flow of fluid through the central cavity such that fluid flowing through the central cavity along at least a portion of the flow path reduces the temperature of the shaft and the rotor.

In an embodiment, the cooling circuit for an e-machine also includes a reservoir in fluid communication with the central cavity, and a sump in fluid communication with the central cavity. At least a portion of the flow path includes the flow of the fluid from the reservoir to the central cavity and into the sump.

In an embodiment, the cooling circuit includes a first conduit connected to and in fluid communication with the reservoir, a central tube at least partially extending into the central cavity, the central tube connected to the first conduit, and the central tube in fluid communication with the first conduit and the central cavity. A second conduit is connected to and in fluid communication with the central cavity and the sump. At least a portion of the flow path includes the flow of fluid from the reservoir, through the first conduit and into the central tube, from the central tube and into the central cavity, and from the central cavity into the second conduit, and from the second conduit into the sump.

In an embodiment, the cooling circuit includes a pinion gear mounted to the shaft and a driven gear in mesh with the pinion gear. The driven gear is at least partially disposed in the sump. As the shaft and the pinion gear rotate, the driven gear is also rotated, and at least a portion of the flow path includes the driven gear transferring fluid from the sump to the reservoir as the driven gear is rotated.

In an embodiment, the cooling includes a cap attached to the shaft such that the cap is in fluid communication with the central cavity and the second conduit. At least a portion of the flow path includes fluid flowing from the central cavity, through the cap and into the second conduit.

In an embodiment, the cooling circuit includes at least one bearing mounted to the shaft. The bearing supports the rotation of the shaft, and the rotor is mounted to the shaft in proximity to the at least one bearing.

In an embodiment, the cooling circuit includes a helical inner surface integrally formed as part of the inner surface of the cavity, and fluid flowing along the flow path flows along the helical inner surface as the shaft rotates.

In an embodiment, the present invention is a method of cooling an e-machine, which includes the steps of providing a reservoir, providing a first conduit connected to and in fluid communication with the reservoir, providing a shaft, providing a rotor mounted to the shaft, the rotor being part of an e-machine, providing a central cavity formed as part of the shaft, providing a central tube at least partially extending into the central cavity, the central tube connected to the first conduit, the central tube in fluid communication with the first conduit and the central cavity, providing a second conduit connected to and in fluid communication with the central cavity, providing a sump in fluid communication with the second conduit, providing a pinion gear mounted to the shaft, providing a driven gear in mesh with the pinion gear, and is rotated by the pinion gear. The method also includes the step of providing a flow path which at least includes the flow of fluid from the reservoir through the first conduit into the central tube, from the central tube into the central cavity, from the central cavity through second conduit and into the sump. The method also includes the step of rotating the shaft and the pinion gear, and at least a portion of the flow path includes transferring fluid from the sump to the reservoir as the driven gear is rotated, reducing the temperature of the shaft and the rotor as the fluid flows along at least a portion of the flow path.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:
Fig. 1A is a first perspective view of a reducer having a cooling circuit, according to embodiments of the present invention;
Fig. 1B is a second perspective view of a reducer having a cooling circuit, according to embodiments of the present invention;
Fig. 1C is a third perspective view of a reducer having a cooling circuit, according to embodiments of the present invention;
Fig. 1D is a fourth perspective view of a reducer having a cooling circuit, according to embodiments of the present invention;
Fig. 2A is a first sectional view of a reducer taken along lines 2A-2A in Figure 1A;
Fig. 2B is a second sectional view of a reducer taken along lines 2A-2A in Figure 1A;
Fig. 2C is a third sectional view of a reducer taken along lines 2A-2A in Figure 1A;
Fig. 2D is a fourth sectional view of a reducer taken along lines 2A-2A in Figure 1A;
Fig. 3A is a graph representing the correlation between the speed of an e-machine and the pump effect of the cooling circuit, according to embodiments of the present invention;
Fig. 3B is a graph of a simulation representing the flow of oil through a central tube and central cavity of a cooling circuit of an e-machine, according to embodiments of the present invention;
Fig. 4 is a graph representing the correlation between the rotational speed of the e-machine and the reduction in performance when the electric drive system operates above a predetermined speed when there is insufficient cooling of the rotor of the e-machine;
Fig. 5A is a perspective view of a reducer having an alternate embodiment of a cooling circuit, according to embodiments of the present invention;
Fig. 5B is an enlarged sectional view of the shaft which is part of the reducer shown in Fig. 5; and
Fig. 5C is an enlarged sectional view of an alternate embodiment of a shaft which is used as part of the reducer shown in Fig. 5.

The following description of the preferred embodiment(s) is merely exemplary in nature and is in no way intended to limit the invention, its application, or uses.

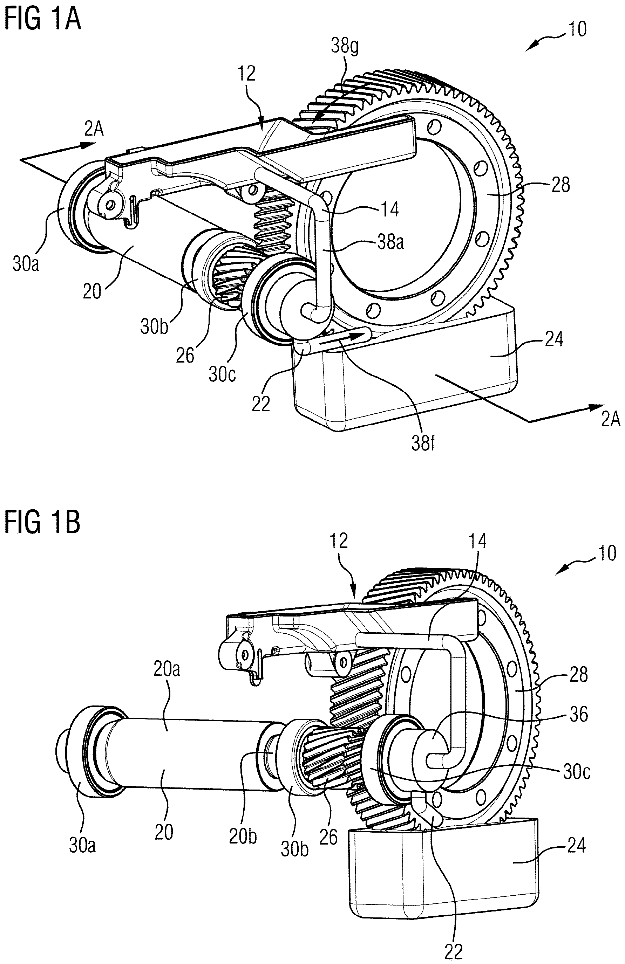

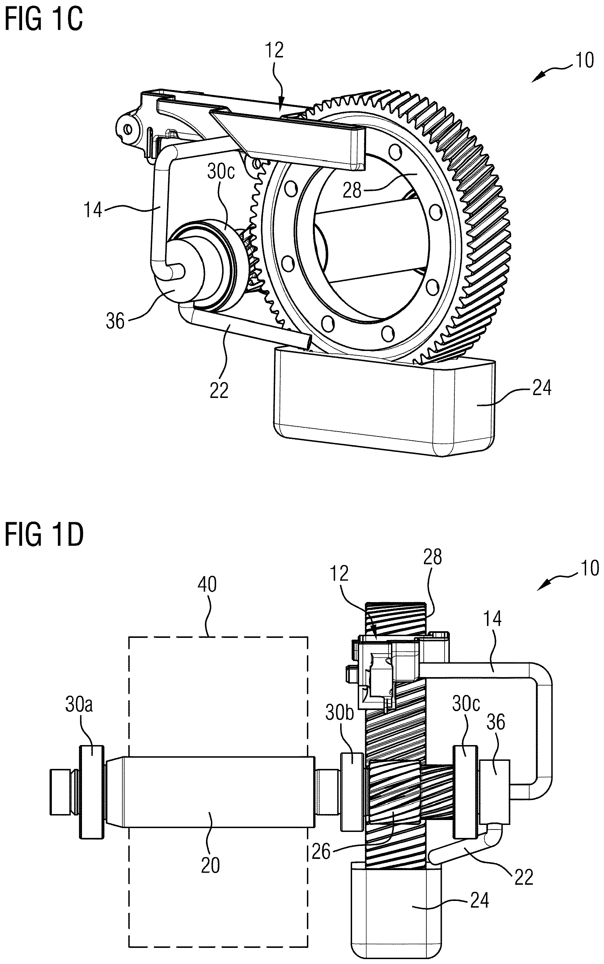

Referring to Figs. 1A-2D, several components of a reducer which is part of an electric drive system are shown generally at 10. The reducer 10 also includes a reservoir, shown generally at 12, and the reservoir 12 is in fluid communication with a first conduit 14. The first conduit 14 is in fluid communication with a central tube 16, where the central tube 16 extends into a central cavity, shown generally at 18, of a shaft 20. In the embodiment shown, the first conduit 14 and the central tube 16 are integrally formed together, but it is within the scope of the invention that the first conduit 14 and central tube 16 may be separate components and connected together. The shaft 20 in the embodiment shown is made of two parts, a first part 20a and a second part 20b. The central cavity 18 is formed as part of both parts 20a,20b of the shaft 20, such that the central cavity 18 has a consistent inner diameter along the entire length of the central cavity 18. The second part 20b has a section 20c which is received into a section 20d of the first part 20a. The cavity 18 is in fluid communication with a second conduit 22, and in addition to the cavity 18, the second conduit 22 is in fluid communication with a sump 24. The reservoir 12, the conduits 14,22, the central tube 16, cavity 18, and sump 24 are components of the reducer 10 which function as a cooling circuit.

The reducer 10 also includes a pinion gear 26 which is integrally formed as part of second portion 20b the shaft 20. The pinion gear 26 is in mesh with a driven gear 28. Also mounted to the shaft 20 is a plurality of bearings 30a,30b,30c, where the bearings 30a,30b,30c support the shaft 20 during rotation. The first bearing 20a is mounted to the first portion 20a of the shaft 20, and the second bearing 30b and the third bearing 30c are mounted to the second portion 20b of the shaft 20, such that the pinion gear 26 is between the second bearing 30b and the third bearing 30c.

The driven gear 28 is partially submerged in the sump 24, as shown in Figures 1A-2D. During operation of the reducer 10, the driven gear 28 rotates, and oil which is in the sump 24 is collected by the driven gear 28, and the oil collected by the driven gear 28 is transferred to the reservoir 12.

Once the oil is in the reservoir 12, the oil flows through the first conduit 14 and into the central tube 16. The oil is gravity fed from the reservoir 12 through the first conduit 14.

As the shaft 20 rotates, the oil flowing from the central tube 16 into the cavity 18 moves towards the inner surface 32 of the cavity 18 due to centrifugal force. As the force of gravity continues to cause the oil to be transferred from the reservoir 12 through the first conduit 14 and into the central tube 16, the oil in the central tube 16 flowing into the central cavity 18 is then transferred through the central cavity 18 and into a cavity, shown generally at 36a, of a cap 36, where the cap 36 is connected to the shaft 20. The fluid in the cavity 36a then flows through an outlet 34 formed as part of the cap 36. The oil then flows from the cap 36 into the second conduit 22 and returns to the sump 24.

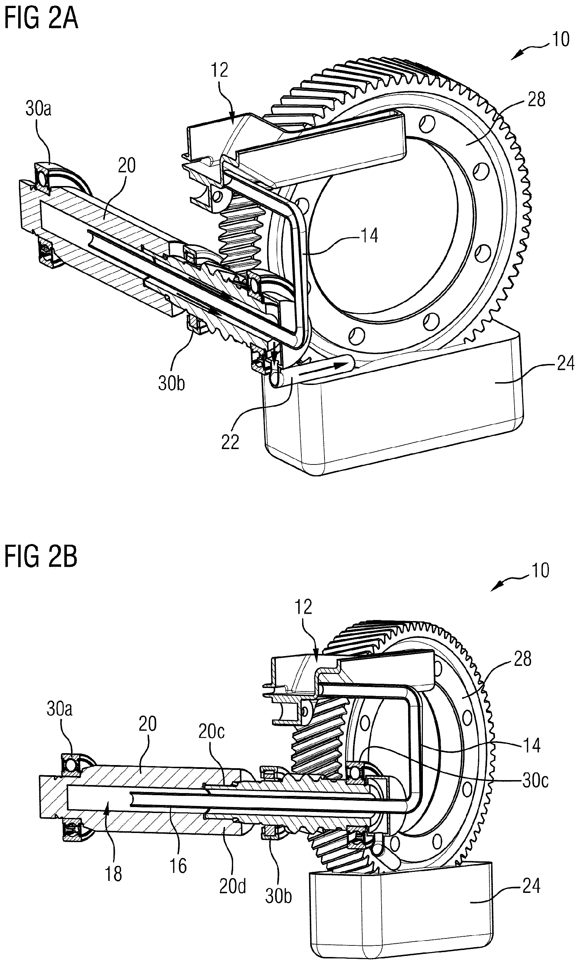

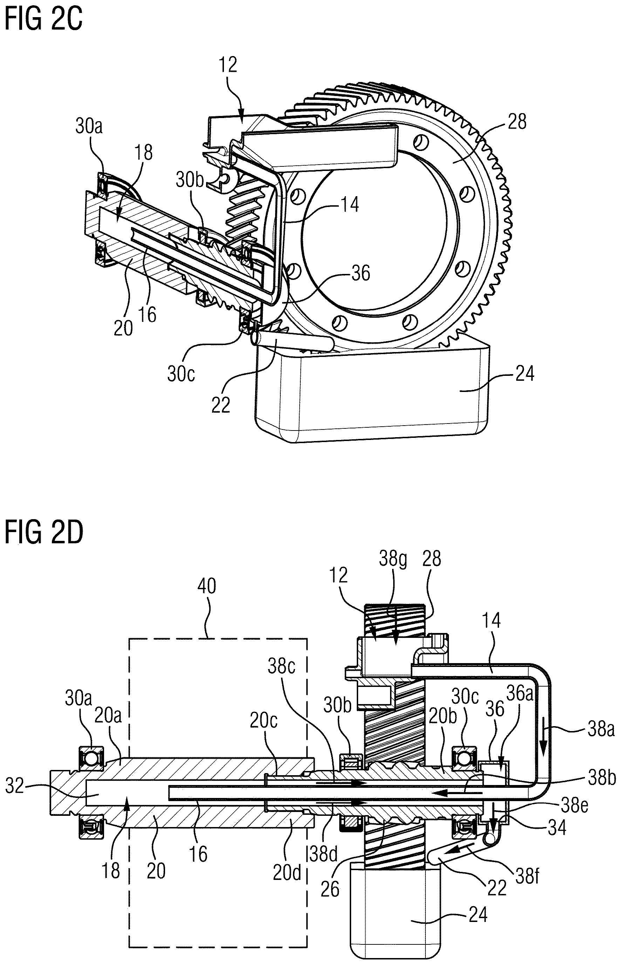

The flow path of the oil is indicated by several arrows in Fig. 2D. More specifically, there is a first arrow 38a which indicates the flow of oil from the reservoir 12 through the first conduit 14 and into the central tube 16. There is a second arrow 38b which indicates the flow of oil through the central tube 16. The third arrow 38c and fourth arrow 38d indicate the flow of oil inside the central cavity 18 along the outside of the central tube 16 and into the cap 36. The fifth arrow 38e indicates the flow of oil from the cap 36 into the second conduit 22, and the sixth arrow 38f indicates the flow of oil through the second conduit 22 and into the sump 24. The last arrow, 38g, indicates the transfer of oil from the driven gear 28 to the reservoir 12.

The circulation of the oil along the flow path indicated by the arrows 38a-38g provides cooling of the shaft 20, the cooling of the shaft 20 also reduces the temperature of a rotor 40, the outline of which is shown in Figures 1D and 2D, which is mounted to the shaft 20 in an area of the shaft 20 which is between the first bearing 30a and the second bearing 30b. The reduction in temperature of the rotor 40 facilitates an improvement in performance of the e-drive system, which the rotor 40 and reducer 10 are part of. Furthermore, the faster the shaft 20 spins, the faster the oil circulates along the flow path, which enhances the cooling effect of the oil on the rotor 40.

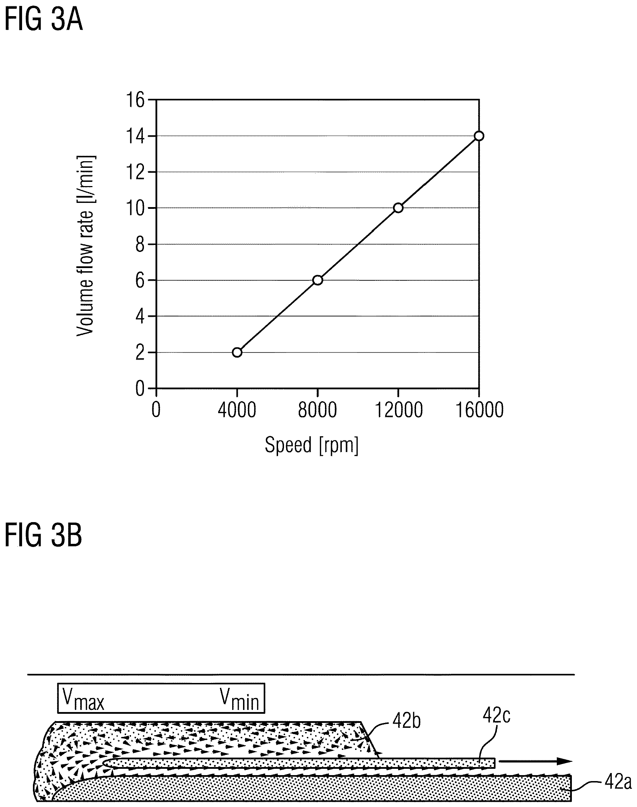

The flow rate of the fluid along the flow path indicated by arrows 38a-38g increases as the rotational speed of the shaft 20 increases. An example showing the correlation between the flow rate of the fluid along the flow path and the rotational speed of the shaft 20 is shown in Fig. 3A. In Fig. 3B, an example of a simulation of the flow of the oil and corresponding velocity field of the oil is shown. The simulation data in Fig. 3B represents the flow and velocity field of the oil through the top half of the central tube 16 and central cavity 18. The simulation includes different regions, the first region 42a represents the flow and velocity field of the oil through the central tube 16. The first region 42a corresponds to the flow of the oil represented by the arrow 38b. The second region 42b represents the flow and velocity field of the oil through the central cavity 18 at a distance away from the central tube 16. The second region 42b corresponds to the flow of the oil represented by one of the arrows 38c,38d. The third region 42c represents the flow and velocity field of the oil through the central cavity 18 in close proximity to the outer surface of the central tube 16. The flow of the oil through the central cavity 18 in close proximity to the outer surface of the central tube 16 is in the same direction of the arrows 38c,38d, but flows at a faster rate.

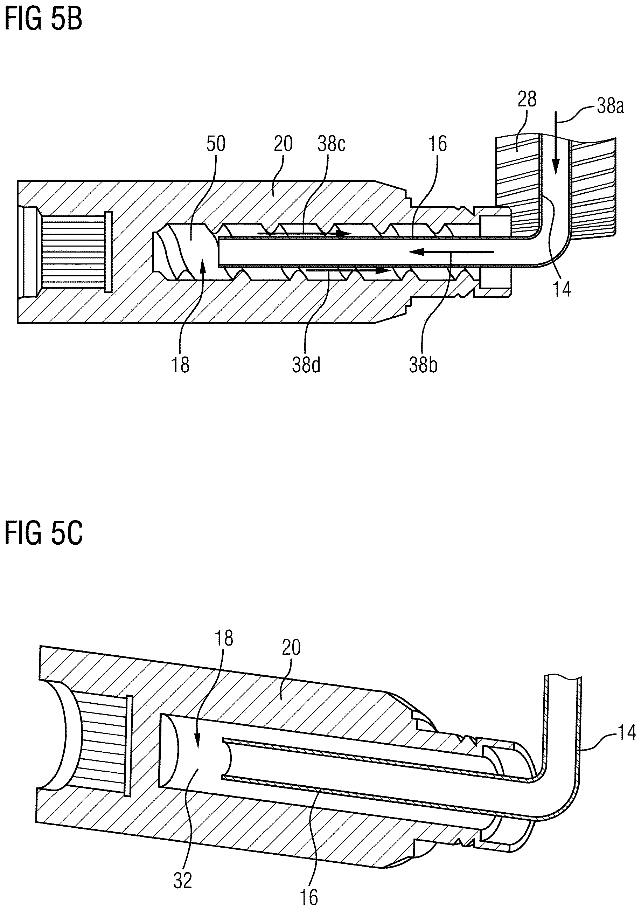

An alternate embodiment of the present invention is shown in Figs. 5A-5B, with like numbers referring to like elements. In this embodiment, the shaft 20 is a single-piece shaft 20, and the first conduit 14 is shaped differently compared to the previous embodiment, but is still connected to the central tube 16. The cavity 18 of the shaft 20 includes an inner surface 50 which has a helical or threaded contour. The helical inner surface 50 facilitates the transfer or flow of oil from the central tube 16 through the cavity 18. As the shaft 20 rotates, the oil flowing from the central tube 16 into the cavity 18 moves towards the helical inner surface 50 of the cavity 18 due to centrifugal force, and the shape of the helical inner surface 50 forces the fluid to flow through the cavity 18 in the direction indicated by the arrows 38c,38d. Therefore, in the embodiment shown in Figs. 5A-5B, the gravity feed (as described in the previous embodiment) in combination with the helical inner surface 50 forces the fluid to flow through the cavity 18. In the embodiment shown, the helical inner surface 50 extends along the entire length of the cavity 18, but it is within the scope of the invention that a portion of the cavity 18, or alternating portions of the cavity 18, may have the helical inner surface 50. The pitch or angle of the helical inner surface 50 may be varied, depending on the desired flow rate of the oil and application. In other embodiments, the inner surface 32 of the cavity 18 of both parts 20a,20b of the shaft 20 shown in Figs. 1A-2D may have a helical or threaded contour, similar to the helical inner surface 50.

Referring now to Fig. 5C, another embodiment of the present invention is shown, with like numbers referring to like elements. This embodiment is similar to the embodiment shown in Figs. 5A-5B, but the shaft 20 does not have the helical inner surface 50.

The present invention is a cooling circuit for reducing the temperature of the rotor of an e-machine or e-motor. The e-machine is part of an electric drive system, and the electric drive system includes a reducer 10, and several components of the reducer 10 are part of the cooling circuit. The cooling circuit includes a conduit 14 which provides fluid communication between a reservoir 12 and a central tube 16, and the central tube 16 extends into, and is in fluid communication with, the central cavity 18 of a shaft 20. The central cavity 18 is also in fluid communication with a second conduit 22 through a cap 36, and the second conduit 22 is also in fluid communication with a sump 24. The fluid is gravity fed from the reservoir 12 through the first conduit 14 and into the central tube 16. The fluid flows from the central tube 16 into the central cavity 18, where centrifugal force causes the fluid to move towards the inner surface 32 of the central cavity 18. The fluid being continuously fed from the reservoir 12 into the first conduit 14 continuously forces the fluid to move through the central tube 16 and central cavity 18 along the flow path previously described. Once the fluid reaches the sump 24, the fluid is then transferred back to the reservoir 12 via a driven gear 28. The driven gear 28 is in mesh with a pinion gear 26, and the pinion gear 26 is mounted to the shaft 20. A rotor 40 of the e-machine is also mounted to the shaft 20. As the shaft 20 rotates, and the fluid circulates along the flow path, cooling the rotor 40. The faster the shaft 20 rotates, the faster the fluid flows along the flow path, as shown in Figure 3A, which provides increased cooling to the rotor 40. The cooling of the rotor 40 allows the e-machine to operate a desired power levels and high speeds.

The description of the invention is merely exemplary in nature and, thus, variations that do not depart from the gist of the invention are intended to be within the scope of the invention. Such variations are not to be regarded as a departure from the spirit and scope of the invention.

## Claims

1. A cooling circuit for an e-machine, the cooling circuit comprising:
- a shaft (20);
- a rotor (40) mounted to the shaft (20), the rotor (40) being part of an e-machine;
- a central cavity (18) formed as part of the shaft (20); and
- a flow path, a portion of the flow path including the flow of fluid through the central cavity (18);
- wherein fluid flowing through the central cavity (18) along at least a portion of the flow path reduces the temperature of the shaft (20) and the rotor (40).

2. The cooling circuit for an e-machine of the preceding claim, the further comprising:
- a reservoir (12) in fluid communication with the central cavity (18); and
- a sump (24) in fluid communication with the central cavity (18);
- wherein at least a portion of the flow path includes the flow of the fluid from the reservoir (12) to the central cavity (18) and into the sump (24).

3. The cooling circuit for an e-machine of claim 2, further comprising:
- a first conduit (14) connected to and in fluid communication with the reservoir (12);
- a central tube (16) at least partially extending into the central cavity (18), the central tube (16) connected to the first conduit (14), and the central tube (16) in fluid communication with the first conduit (14) and the central cavity (18); and
- a second conduit (22) connected to and in fluid communication with the central cavity (18) and the sump (24);
- wherein at least a portion of the flow path includes the flow of fluid from the reservoir (12), through the first conduit (14) and into the central tube (16), from the central tube (16) and into the central cavity (18), and from the central cavity (18) into the second conduit (22), and from the second conduit (22) into the sump (24).

4. The cooling circuit for an e-machine of one of the preceding claims, further comprising:
- a pinion gear (26) mounted to the shaft (20); and
- a driven gear (28) in mesh with the pinion gear (26), the driven gear (26) at least partially disposed in the sump (24);
- wherein as the shaft (20) and the pinion gear (26) rotate, the driven gear (28) is also rotated, and at least a portion of the flow path includes the driven gear (28) transferring fluid from the sump (24) to the reservoir (12) as the driven gear (28) is rotated.

5. The cooling circuit for an e-machine of one of the preceding claims, further comprising a cap (36) attached to the shaft (20), the cap (36) in fluid communication with the central cavity (18) and the second conduit (22) such that at least a portion of the flow path includes fluid flowing from the central cavity (18), through the cap (36) and into the second conduit (22).

6. The cooling circuit for an e-machine of one of the preceding claims, further comprising:
- at least one bearing (30a,30b,30c) mounted to the shaft (20);
- wherein the at least one bearing (30a,30b,30c) supports the rotation of the shaft (20), and the rotor (40) is mounted to the shaft (20) in proximity to the at least one bearing (30a,30b,30c).

7. The cooling circuit for an e-machine of one of the preceding claims, further comprising:
- a helical inner surface (50) integrally formed as part of the inner surface of the cavity (18);
- wherein fluid flowing along the flow path flows along the helical inner surface (50) as the shaft (20) rotates.

8. A cooling circuit for an e-machine, the cooling circuit comprising:
- a reservoir (12);
- a first conduit (14) connected to and in fluid communication with the reservoir (12);
- a shaft (20);
- a rotor (40) mounted to the shaft (20), the rotor (40) being part of an e-machine;
- a central cavity (18) formed as part of the shaft (20);
- a central tube (16) at least partially extending into the central cavity (18), the central tube (16) connected to the first conduit (14), and the central tube (16) in fluid communication with the first conduit (14) and the central cavity (18);
- a second conduit (22) connected to and in fluid communication with the central cavity (18);
- a sump (24) in fluid communication with the second conduit (22);
- a pinion gear (26) mounted to the shaft (20);
- a driven gear (28) in mesh with the pinion gear (26), and is rotated by the pinion gear (26); and
- a flow path which at least includes the flow of fluid from the reservoir (12) through the first conduit (14) into the central tube (16), from the central tube (16) into the central cavity (18), from the central cavity (18) through second conduit (22) and into the sump (24);
- wherein fluid flowing along at least a portion of the flow path reduces the temperature of the shaft (20) and the rotor (40).

9. The cooling circuit for an e-machine of the preceding claim, the further comprising:
- a cap (36) attached to the shaft (20), the cap (36) in fluid communication with the central cavity (18) and the second conduit (22); and
- an outlet (34) being formed as part of the cap (36);
- wherein at least a portion of the flow path includes fluid flowing from the central cavity (18), through the cap (36), through the outlet (34), and into the second conduit (22).

10. The cooling circuit for an e-machine of one of the preceding claims, at least a portion of the flow path further comprising the driven gear (28) transferring fluid from the sump (24) to the reservoir (12) as the driven gear (28) is rotated.

11. The cooling circuit for an e-machine of one of the preceding claims, further comprising:
- at least one bearing (30a,30b,30c) mounted to the shaft (20);
- wherein the at least one bearing (30a,30b,30c) supports the rotation of the shaft (20), and the rotor (40) is mounted to the shaft (20) in proximity to the at least one bearing (30a,30b,30c).

12. The cooling circuit for an e-machine of one of the preceding claims, further comprising:
- a helical inner surface (50) integrally formed as part of the inner surface of the cavity (18);
- wherein fluid flowing along the flow path flows along the helical inner surface (50) as the shaft (20) rotates.

13. A method of cooling an e-machine, comprising the steps of:
- providing a reservoir (12);
- providing a first conduit (14) connected to and in fluid communication with the reservoir (12);
- providing a shaft (20);
- providing a rotor (40) mounted to the shaft (20), the rotor (40) being part of an e-machine;
- providing a central cavity (18) formed as part of the shaft (20);
- providing a central tube (16) at least partially extending into the central cavity (18), the central tube (16) connected to the first conduit (14), the central tube (16) in fluid communication with the first conduit (14) and the central cavity (18);
- providing a second conduit (22) connected to and in fluid communication with the central cavity (18);
- providing a sump (24) in fluid communication with the second conduit (22);
- providing a pinion gear (26) mounted to the shaft (20);
- providing a driven gear (28) in mesh with the pinion gear (26), and is rotated by the pinion gear (26); and
- providing a flow path which at least includes the flow of fluid from the reservoir (12) through the first conduit (14) into the central tube (16), from the central tube (16) into the central cavity (18), from the central cavity (18) through second conduit (22) and into the sump (24);
- rotating the shaft (20) and the pinion gear (26), and at least a portion of the flow path includes transferring fluid from the sump (24) to the reservoir (12) as the driven gear (28) is rotated;
- reducing the temperature of the shaft (20) and the rotor (40) as the fluid flows along at least a portion of the flow path.
